# EUROPEAN PATENT SPECIFICATION

(11) **EP 1 832 158 B1**
(45) Date of publication and mention of the grant of the patent: **09.04.2014**
(21) Application number: 05822576.4
(22) Date of filing: 27.12.2005
(51) Int. Cl.: A01G 9/02, A01G 27/00, A01G 27/02

(54) **Plant culturing device**
Pflanzenzuchtvorrichtung
Dispositif de culture de plantes

(30) Priority: 27.12.2004 JP 2004376440
(43) Date of publication of application: 12.09.2007
(73) Proprietor: Suntory Holdings Limited, Kita-ku, Osaka-shi, Osaka 530-8203 (JP)
(72) Inventor: HASHIMOTO, Masaki, 5670835 (JP); MIYAGAWA, Katsuro, 5691022 (JP); NAKAMURA, Saori, 5690061 (JP)
(74) Representative: Vossius & Partner
(86) International application number: PCT/JP2005/023856
(87) International publication number: WO 2006/070783

(56) References cited:
- EP-A2- 0 623 276
- JP-A- 63 074 429
- JP-A- 2004 024 029
- JP-A- 2004 024 029
- JP-U- 03 051 768
- US-A- 4 006 559
- US-A- 5 251 399
- US-A- 5 598 662

## Description

### TECHNICAL FIELD

The present invention relates to a plant culturing apparatus including a culturing vessel capable of culturing a plant therein, a tank capable of reserving a culturing liquid for the plant therein, a communication passage communicating between the vessel and the tank, and a pump incorporated in the communication passage, the pump being capable of feeding the liquid reserved in the tank to the plant culturing vessel.

### BACKGROUND ART

The plant culturing apparatus described above is capable of feeding the reserved liquid in the tank to the culturing vessel with an operation of the pump provided in the communication passage between the culturing vessel and the tank, so that a watering operation to the plant can be simple. Conventionally, however, the culturing vessel and the tank are provided separately of each other and connected via a tube forming the communication passage (see e.g. Patent Document 1).

Patent Document 1: Japanese Patent Application "Kokai" No. 2004-24029

US 5251399 relates to a vertical plant stand arrangement with plant stations, a lower base having a water reservoir compartment, a pumping system and a central vertical support column.

### DISCLOSURE OF THE INVENTION

### PROBLEM TO BE SOLVED BY INVENTION

For the above reason, installment of the plant culturing apparatus requires a space sufficient for disposing the culturing vessel and the tank separately of each other. And, if the disposing place of the culturing vessel is to be changed, it is necessary to secure space separately for disposing the tank also. Even if the culturing vessel alone is to be moved, it is necessary to connect the culturing vessel with the tank via a long tube. Hence, the invention suffers inconvenience in the respect of disposing space as well as movability of the culturing vessel.

The present invention has been made in view of the above-described state of the art and its object is to construct the apparatus convenient in the respects of both the installing space and movability of the culturing vessel.

### MEANS TO SOLVE THE PROBLEM

The present invention relates to a plant culturing apparatus according to claim 1.

According to a feature of the plant culturing apparatus of the present invention, the plant culturing apparatus comprises: a culturing vessel capable of culturing a plant therein, a tank capable of reserving a culturing liquid for the plant therein, a communication passage communicating between the vessel and the tank, and a pump incorporated in the communication passage, the pump being capable of feeding the liquid reserved in the tank to the plant culturing vessel; wherein said tank includes a support portion capable of supporting the culturing vessel upwardly of the tank; said communication passage is disposed along said support portion; and said pump is provided integrally with said tank.

With the plant culturing apparatus having the above-described construction, in order to allow the culturing vessel and the tank to be disposed as one unit, the tank is provided with the support portion capable of supporting the culturing vessel upwardly of the tank. And, the communication passage for communicating the culturing vessel with the tank is disposed along the support portion and the pump capable of feeding the reserved liquid in the tank to the culturing vessel is provided integrally with the tank. As a result, the installment of the plant culturing apparatus requires only a small space. And, if the disposing place of the culturing vessel is to be changed, the culturing vessel can be contained within a space above the disposing space of the tank, as long as the disposing space for the tank can be secured. Hence, there is no need of securing any disposing space for the culturing vessel in particular. And, the culturing vessel and the tank can be moved together. Accordingly, there are achieved convenience in the respect of the disposing space as well as in the movability of the culturing vessel.

In the plant culturing apparatus of the present invention, the apparatus is constructed so as to allow returning of any excess liquid from the culturing liquid fed to the culturing vessel back to the tank via the communication passage.

With the plant culturing apparatus having the above-described construction, any excess liquid from the culturing liquid fed to the culturing vessel can be returned to the tank via the communication passage. Namely, the feeding of the culturing liquid from the tank to the culturing vessel and the returning of the excess liquid from the culturing vessel to the tank are effected by using the same communication passage. Therefore, this is no need of providing separately a passage for returning the excess liquid to the tank, so that by returning the excess liquid to the tank, the root rot of the plant can be prevented and also the culturing liquid can be used efficiently.

In the plant culturing apparatus of the present invention, said pump is constructed as a tube pump which can be switched over between a condition for feeding the reserved liquid to the culturing vessel and a further condition for introducing into the tank, excess liquid from the culturing liquid fed to the culturing vessel and aerating air for bubbling in the reserved liquid.

With the plant culturing apparatus having the above-described construction, the pump capable of feeding the reserved liquid in the tank to the culturing vessel is constructed as a tube pump which can be formed compact and generate less vibration and noise in its driving condition, as compared with a vacuum pump or a compressor. Therefore, the apparatus can be readily installed in such place as a balcony, sun room, or a room of a private house, without damaging its environment.

Further, as this tube pump can be switched over between a condition for feeding the reserved liquid to the culturing vessel and a further condition for introducing into the tank, excess liquid from the culturing liquid fed to the culturing vessel and aerating air for bubbling in the reserved liquid, then, by switching over this tube pump to the condition for introducing into the tank, excess liquid from the culturing liquid fed to the culturing vessel and aerating air for bubbling in the reserved liquid, the excess liquid can be positively returned to the tank for preventing root rot of the plant and the culturing liquid can be used efficiently, without having to provide separately an additional passage for returning the excess liquid to the tank. In addition, since the aerating air can be introduced into the tank for supplying oxygen to the culturing liquid reserved in the tank, decay of the culturing liquid can be effectively avoided and culturing liquid rich in oxygen dissolved therein can be supplied to the culturing vessel.

In the plant culturing apparatus of the present invention, said tank can include a further culturing vessel other than said culturing vessel, so that the reserved liquid can be supplied naturally to said further culturing vessel.

With the plant culturing apparatus having the above-described construction, the tank includes a further culturing vessel other than said culturing vessel, so that the reserved liquid can be supplied naturally to said further culturing vessel. Then, in the further culturing vessel capable of naturally supplying the reserved liquid to the tank in addition to the culturing vessel supported upwardly of the tank, the plant can be easily cultured without effecting a watering operation in particular. Further, the vicinity of the tank can be decorated neatly with the plant cultured in the further culturing vessel.

### BEST MODE OF EMBODYING THE INVENTION

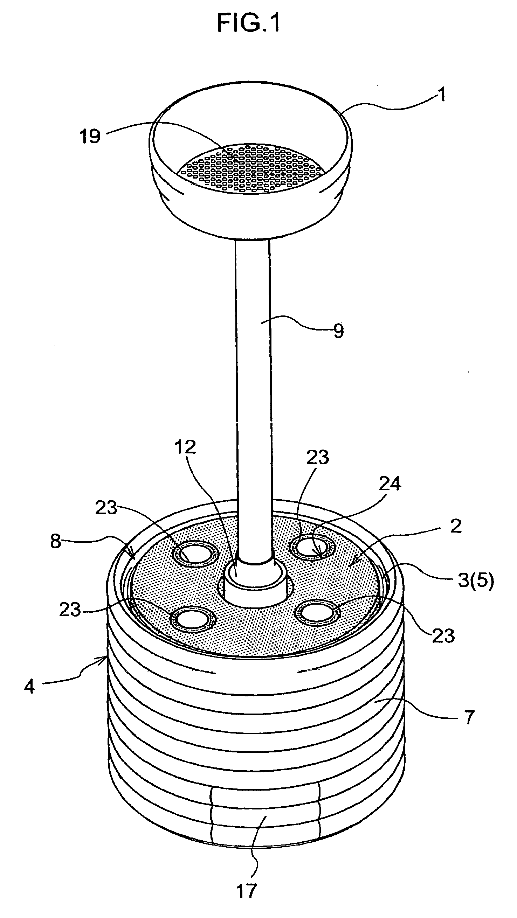

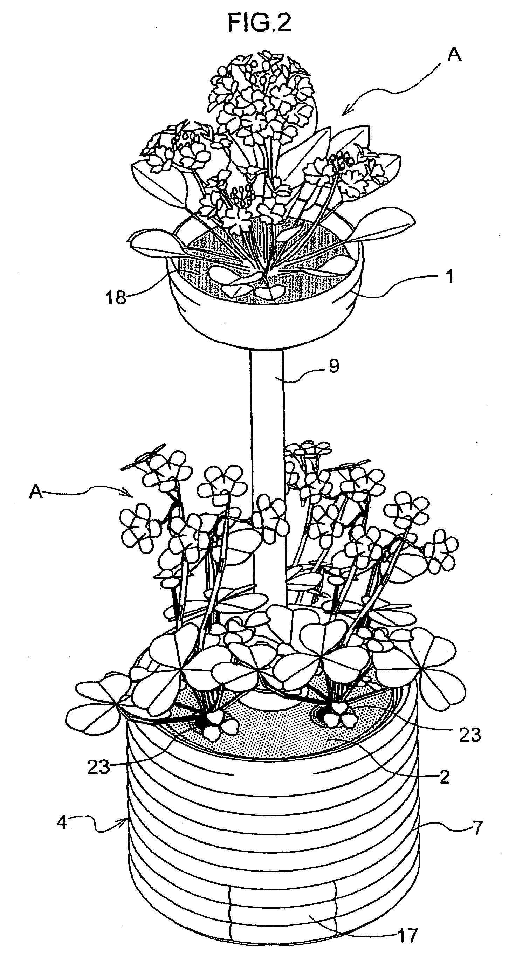

Figs. 1 and 2 show a plant culturing apparatus according to the present invention. The apparatus includes upper and lower culturing vessels 1, 2 formed of resin and capable of culturing plants A therein, and a tank 4 formed of resin and capable of reserving culturing liquid 3 containing fertilizer components and antiseptic components dissolved in water for the plants A cultured in the respective culturing vessels 1, 2. As shown in Fig. 2, this apparatus can be installed as a three-dimensional flowerbed.

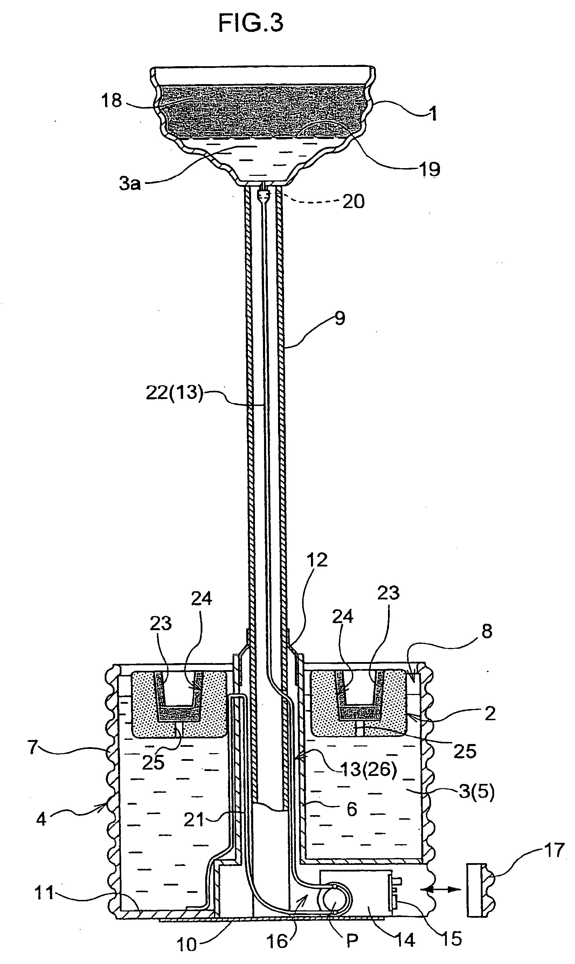

In order to form an annular (in plan view) reserving section 5 for the culturing liquid 3, as shown in Fig. 3, the tank 4 includes a cylindrical inner peripheral wall 6 and an outer peripheral wall 7 disposed coaxially. Between the inner peripheral wall 6 and the outer peripheral wall 7, there is formed a continuous annular upward opening 8, in which the further culturing vessel other than the upper culturing vessel 1, namely, the lower culturing vessel 2 is provided.

And, a hollow cylindrical support member 9 capable of supporting the upper culturing vessel 1 upwardly of the tank 4 is inserted coaxially inside the inner peripheral wall 6; a base plate 10 secured to the lower end of the support member 9 is fixed to a tank bottom plate 11; a truncated conical cap 12 is provided for closing a gap between the support member 9 and the inner peripheral wall 6.

As shown in Fig. 3, the upper culturing vessel 1 and the tank 4 are connected and communicated with each other via a flexible resin tube 13 forming a communication passage 26 therein; and at an intermediate portion of this tube 13, there is connected a pump P capable of feeding the reserved liquid (culturing liquid) 3 in the tank 4 to the upper culturing vessel 1, thus providing automatic watering to the upper culturing vessel 1.

The pump P is an electric driven tube pump ("Peristapump" (registered trademark)) including a control unit 14 incorporating a control section capable of automatic switchover between a condition for feeding the culturing liquid 3 through the tube 13 to the upper culturing vessel 1 and a further condition for introducing through the tube 13 to the tank 4, excess liquid 3a accumulated at a lower portion of a catch basin 19 from the culturing liquid 3 fed to the upper culturing liquid 1 as well as aeration air for bubbling in the reserved liquid 3 and a panel switch 15 for allowing setting, in the control unit 14, a driving interval of the tube pump P and various control modes such as suctioning/discharging directions, etc. Hence, the excess liquid 3a from the culturing liquid 3 fed to the upper culturing vessel 1 can be returned to the tank 4 via the tube 13.

The tube pump P, the control unit 14 and the panel switch 15 are fixed to the base plate 10 and are accommodated in an accommodating space 16 formed between the base plate 10 and a partially upward convex portion of the tank bottom plate 11, so that the pump P, the unit 14 and the switch 15 are provided integrally and together downwardly of the tank 4. Further, a lid member 17 capable of opening/closing the accommodating space 16 is detachably provided to conform to the outer peripheral shape of the tank 4.

Incidentally, as a power source for the tube pump P, the control unit 14, etc. an unillustrated external power source is provided. However, an internal power source such as a battery accommodated in the accommodating space 16 can be employed instead.

The upper culturing vessel 1 is provided in the form of an upwardly oriented approximately circular bowl, with the catch basin 19 provided therein so as to be capable of accommodating, upwardly of the catch basin 19, a culture medium 18 for culturing the plant A. Examples of the culture medium 18 include such commonly employed natural media as compost, leaf mold, peat moss, as well as artificial media such as vermiculite, pearlite, rock wool, hydro ball, sponge, etc. which media are preformed for easy replacement of the plant A. On the bottom face side thereof, the support member 9 is fixed and supported upwardly of the tank 4, with a connector portion 20 projecting inside the support member 9 for allowing connection of the tube communicated with the lower vessel side of the catch basin 19.

Referring to the tube 13, an upstream portion 21 thereof connecting between the tube pump P and the tank 4 extends through a gap formed between the support member 9 and the inner peripheral wall 6 and extends through a side hole defined in the inner peripheral wall 6 into the reserved liquid 3, with its open end being submerged in the reserved liquid 3. And, a downstream portion 22 thereof connecting between the tube pump P and the upper culturing vessel 1 extends along and inside the support member 9 to be connected to the connector portion 20.

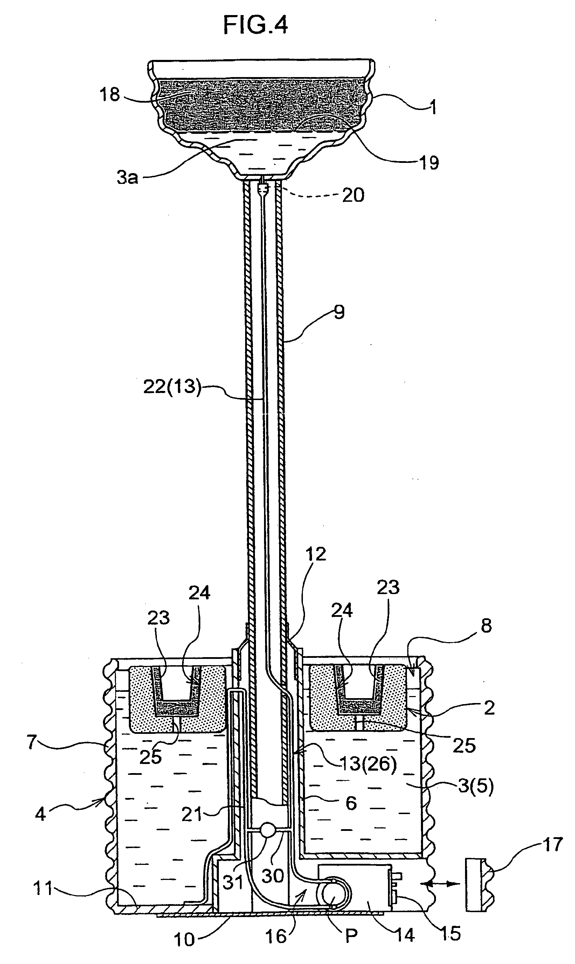

As shown in Fig. 4, there can be provided a bypass passage 30 connecting between the upstream portion 21 and the downstream portion 22 of the tube 13, together with a valve 31 incorporated therein. When the reserved liquid 3 in the tank 4 is to be supplied to the upper culturing vessel 1, the pump P will be driven and the valve 31 will be closed. In this case, a normal feeding operation will be effected. Whereas, when the excess liquid 3a from the culturing liquid 3 fed to the upper culturing vessel 1 is to be returned to the tank 4, the pump P will be stopped and the valve 31 will be opened. In this case, the excess liquid 3a will flow under the gravity effect from the downstream portion 22 of the tube 13 through the bypass passage 30 to the upstream portion 21 of the tube 13.

In this way, with the provision of the bypass passage 30 equipped with the valve 31, it is possible to feed the reserved liquid 3 from the tank 4 to the upper culturing vessel 1 and also to easily return the excess liquid 3a of the upper culturing vessel 1 to the tank 4. And, when the excess liquid 3a is returned to the tank 4, this does not require driving of the pump P. Therefore, this construction is economical and also, an inexpensive pump can be employed since there is no need for changing the suctioning/discharging directions of the pump P.

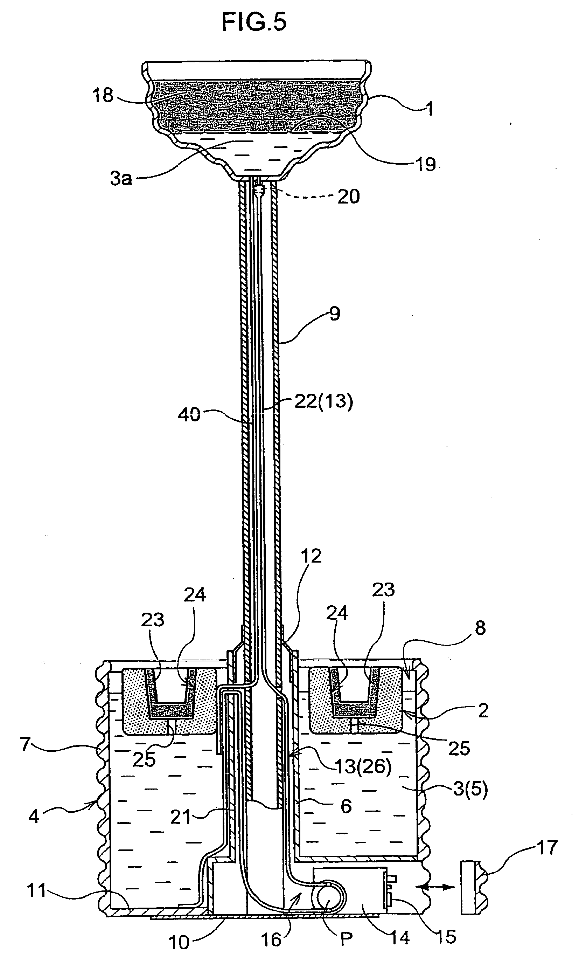

The embodiment of figure 5 does not form part of the invention.

As shown in Fig. 5, there can be provided a narrow tube 40 which extends from the upper culturing vessel 1 through the inside of the support member 9 and through the inner peripheral wall 6 to be communicated with the tank 4.

With this construction, the excess liquid 3a of the upper culturing vessel 1 will be returned little by little through the narrow tube 40 to the tank 4. Therefore, this construction can eliminate the necessity of watering operation to the lower culturing vessel 2 and also can maintain balance between the reserved liquid 3 in the tank 4 and the excess liquid 3a in the upper culturing vessel 1, only with occasional driving of the pump P. Further, an inexpensive pump can be employed since there is no need for changing the suctioning/ discharging directions of the pump P.

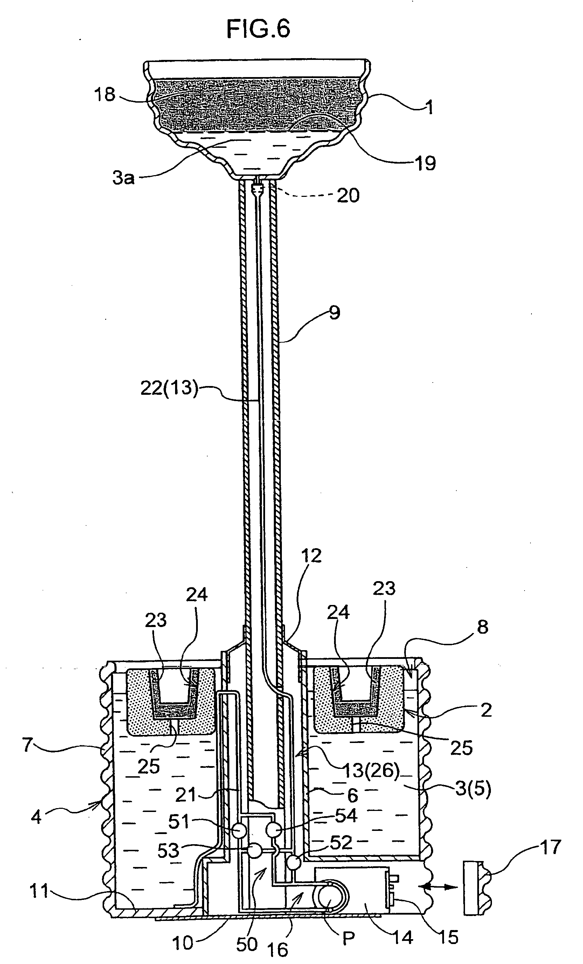

As shown in Fig. 6, there can be provided a cross passage 50 between the upstream portion 21 and the downstream portion 22 of the tube 13, together with valves 51, 52, 53, 54. In operation, when the reserved liquid 3 in the tank 4 is to be supplied to the upper culturing vessel 1, a normal feeding operation will be effected by driving the pump P, with opening the valves 51, 52 and closing the valves 53, 54. Whereas, when the excess liquid 3a from the culturing liquid 3 fed to the upper culturing vessel 1 is to be returned to the tank 4, the driving of the pump P will be maintained, with closing this time the valves 51, 52 and opening the valves 53, 54. In this case, the suctioning side of the pump P is connected to the downstream portion 22 and the discharging side thereof is connected to the upstream portion 21, respectively, so that the flowing directions of the reserved liquid 3 and the excess liquid 3a are reversed.

In this way, with the provision of the cross passage 50 equipped with the valves 51, 52, 53, 54, it is possible to feed the reserved liquid 3 from the tank 4 to the upper culturing vessel 1 and also to easily return the excess liquid 3a of the upper culturing vessel 1 to the tank 4. Moreover, an inexpensive pump can be employed since there is no need for changing the suctioning/ discharging directions of the pump P.

The lower culturing vessel 2 is formed annular in its plan view and made of foamed polystyrene. And, this vessel 2 is fitted coaxially in the reserving section 5 through its upward opening 8. The vessel 2 defines a plurality of circular accommodating holes 24 along the peripheral direction, each hole 24 allowing insertion and removal of a preformed culture medium 23 having a cylindrical shape equipped with a bottom and formed of a porous material such as a sponge for allowing passage of air and the culturing liquid 3. Further, at the bottom of each accommodating hole 24, there is formed a through hole 25 for allowing natural feeding of the reserved liquid 3 in the reserving section 5 to the inside of the preformed culture medium 23 through this through hole 25. Hence, the vessel 2 is constructed to allow the floating water culturing as the vessel 2 is afloat in the reserved liquid 3 together with the plants A planted within the respective preformed culture media 23.

Incidentally, the floating level position of this lower culturing vessel 2 will vary according to the liquid level of the reserved liquid 3. Therefore, this vessel 2 can act also as a water gauge for allowing one to know the liquid level of the reserved liquid 3 from the level of this lower culturing vessel 2.

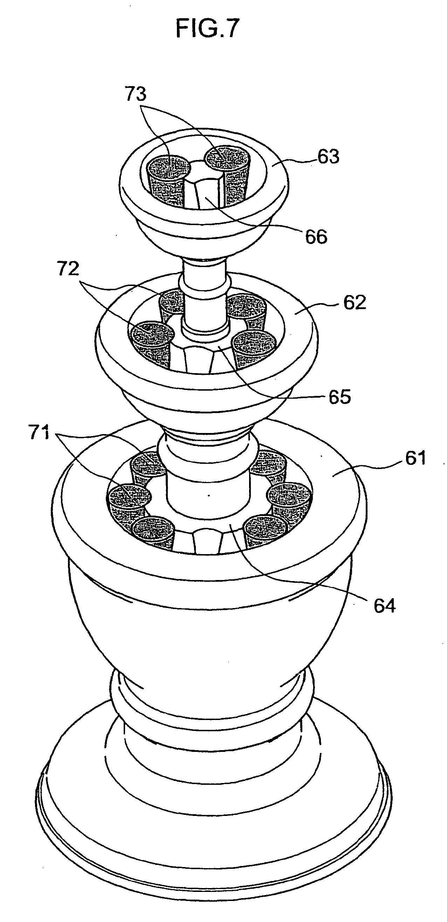

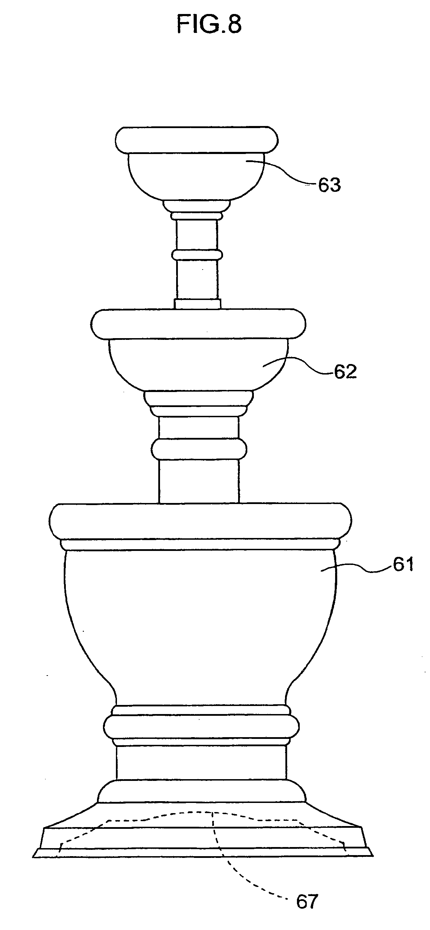

Next, a further embodiment of the plant culturing apparatus relating to the present invention will be described. In this further embodiment, the culturing vessels constituting the plant culturing apparatus are provided in multiple stages. Fig. 7 is a perspective view of the multiple stages of the plant culturing vessels and Fig. 8 is a front view of the multiple stages of the plant culturing vessels. In the further embodiment shown in the figures, there is shown a three-stage type plant culturing apparatus including plant culturing vessels 61, 62, 63. However, the number of stages can vary as desired.

The lowermost stage culturing vessel 61 accommodates the pump P (not shown), so that the reserved liquid in this culturing vessel 61 is transported by the pump P to the uppermost stage culturing vessel 63. Excess liquid from the reserved liquid transported to the culturing vessel 63 will eventually overflow to be supplied to the lower culturing vessel 62 downwardly thereof. Next, excess liquid from this culturing liquid supplied to the culturing vessel 62 will overflow to be supplied to the lowermost culturing vessel 61 downwardly thereof. And, this culturing liquid supplied to the culturing vessel 61 will be transported again by the pump P to the uppermost culturing vessel 63. In this way, the reserved liquid will be circulated to/from the respective culturing vessels 61, 62, 63.

At the center of the bottom of each culturing vessel 61, 62, 63, there can be provided a medium fixing means 64, 65, 66. In this case, a plant culturing medium 71, 72, 73 can be fitted in a recess formed in the medium fixing means 64, 65, 66. If the medium 71, 72, 73 is formed of an elastic member such as a sponge, the medium will be elastically clamped within the medium fixing means 64, 65, 66. As a result, there will occur no sweeping away or displacement of the medium by e.g. the reserved liquid. Incidentally, if the lowermost stage is constructed as the float watering type construction like the one shown in Fig. 3, it becomes possible for one to learn the liquid level of the reserved liquid in the culturing vessel 61.

Further, the lowermost culturing vessel 61 has an inwardly projecting dome-shaped bottom portion 67 to secure sufficient rigidity. Therefore, the posture of the plant culturing apparatus can be stable and will not topple easily.

### [OTHER EMBODIMENTS]

1. The plant culturing apparatus of the invention can be configured to render the upper surface of the tank usable as a table or a stool.
2. The plant culturing apparatus of the invention can be constructed such that the pump is provided integrally with the top portion or side portion of the tank.
3. The plant culturing apparatus of the invention can be constructed such that the apparatus further includes a support portion capable of placing the culturing vessel thereon or a support portion capable of suspending the culturing vessel.
4. The plant culturing apparatus of the invention can be constructed such that the support portion capable of supporting the culturing vessel upwardly of the tank is formed as a cylindrical body having a substantially same diameter as the tank.
5. The plant culturing apparatus of the invention can be constructed such that there is provided a communicating passage communicating the culturing vessel with the lower portion of the tank and the pump for feeding the culturing liquid is incorporated in this communication passage.
6. The plant culturing apparatus of the invention can be constructed such that the excess liquid from the culturing liquid fed to the culturing vessel can be returned under the gravity effect to the tank.
7. The plant culturing apparatus of the invention can be constructed such that in addition to the pump capable of feeding the reserved liquid in the tank to the culturing vessel, there is provided a further pump for introducing the excess liquid from the liquid fed to the culturing vessel and aeration air for bubbling in the reserved liquid to the tank.

### INDUSTRIAL APPLICABILITY

The plant culturing apparatus according to the present invention requires only small space for its installment and can be readily handled since the culturing vessel and the tank can be moved together. Therefore, the inventive plant culturing apparatus can be used not only for industrial purpose, but also for domestic purpose, being applicable for a great variety of usages.

### BRIEF DESCRIPTION OF THE DRAWINGS

[Fig. 1] a perspective view of a plant culturing apparatus,
[Fig. 2] a perspective view showing a plant culturing condition,
[Fig. 3] a vertical section of the plant culturing apparatus,
[Fig. 4] a vertical section of a plant culturing apparatus including a bypass passage equipped with a valve,
[Fig. 5] a vertical section of a plant culturing apparatus not forming part of the invention including a narrow tube,
[Fig. 6] a vertical section of a plant culturing apparatus including a cross passage equipped with valves,
[Fig. 7] a perspective view of a multiple stage plant culturing apparatus,
[Fig. 8] a front view of the multiple stage plant culturing apparatus.

### DESCRIPTION OF REFERENCE MARKS

- 1: culturing vessel
- 2: further culturing vessel
- 3: culturing liquid (reserved liquid)
- 3a: excess liquid
- 4: tank
- 9: support portion
- 26: communication passage
- A: plant
- P: pump (tube pump)

## Claims

1. A plant culturing apparatus comprising: a culturing vessel (1) capable of culturing a plant (A) therein, a tank (4) capable of reserving a culturing liquid (3) for the plant (A) therein, a communication passage (26) communicating between the vessel (1) and the tank (4), and a pump (P) capable of feeding the liquid (3) reserved in the tank (4) to the plant culturing vessel (1);
wherein said tank (4) includes a support portion (9) capable of supporting the culturing vessel (1) upwardly of the tank (4); said communication passage (26) is disposed along said support portion (9); and said pump (P) is provided integrally with said tank (4),
**characterized in that**
the communication passage (26) is formed of a flexible resin tube (13); the pump (P) is constructed as a tube pump; and the pump (P) is connected at an intermediate portion of the resin tube (13), the pump (P) being capable of feeding the culturing liquid (3) to the culturing vessel (1) via the resin tube (13), and
returning the excess liquid (3a) from the culturing liquid (3) fed to the culturing vessel (1) back to the tank (4) via the resin tube (13).

2. The plant culturing apparatus according to claim 1, **characterized in that** said pump (P) can be switched over between a condition for feeding the reserved liquid (3) to the culturing vessel (1) and a further condition for introducing into the tank (4), excess liquid (3a) from the culturing liquid (3) fed to the culturing vessel (1) and aerating air for bubbling in the reserved liquid.

3. The plant culturing apparatus according to claim 1, **characterized in that** said tank (4) includes a further culturing vessel (2) other than said culturing vessel (1), so that the reserved liquid (3) can be supplied naturally to said further culturing vessel (2).

## Patentansprüche

1. Pflanzenzuchtvorrichtung, die aufweist: ein Zuchtgefäß (1), in dem eine Pflanze (A) gezüchtet werden kann, einen Tank (4), in dem eine Zuchtflüssigkeit (3) für die Pflanze (A) gespeichert werden kann, einen Verbindungskanal (26), der zwischen dem Gefäß (1) und dem Tank (4) verbindet, und eine Pumpe (P), die die im Tank (4) gespeicherte Flüssigkeit (3) dem Pflanzenzuchtgefäß (1) zuführen kann;
wobei der Tank (4) einen Stützabschnitt (9) aufweist, der das Zuchtgefäß (1) vom Tank (4) nach oben abstützen kann; der Verbindungskanal (26) am Stützabschnitt (9) entlang angeordnet ist; und die Pumpe (P) integral mit dem Tank (4) vorgesehen ist,
**dadurch gekennzeichnet, dass**
der Verbindungskanal (26) aus einem flexiblen Harzschlauch (13) gebildet ist;
die Pumpe (P) als Schlauchpumpe aufgebaut ist; und
die Pumpe (P) an einem Zwischenabschnitt des Harzschlauchs (13) verbunden ist, wobei die Pumpe (P) die Zuchtflüssigkeit (3) über den Harzschlauch (13) dem Zuchtgefäß (1) zuführen und
die überschüssige Flüssigkeit (3a) der dem Zuchtgefäß (1) zugeführten Zuchtflüssigkeit (3) über den Harzschlauch (13) wieder dem Tank (4) zuführen kann.

2. Pflanzenzuchtvorrichtung nach Anspruch 1, **dadurch gekennzeichnet, dass** die Pumpe (P) zwischen einem Zustand zum Zuführen der gespeicherten Flüssigkeit (3) zum Zuchtgefäß (1) und einem weiteren Zustand zum in den Tank (4) erfolgenden Einleiten überschüssiger Flüssigkeit (3a) der dem Zuchtgefäß (1) zugeführten Zuchtflüssigkeit (3) und zum Belüften zur Blasenbildung in der gespeicherten Flüssigkeit umgeschaltet werden kann.

3. Pflanzenzuchtvorrichtung nach Anspruch 1, **dadurch gekennzeichnet, dass** der Tank (4) außer dem Zuchtgefäß (1) ein weiteres Zuchtgefäß (2) so aufweist, dass die gespeicherte Flüssigkeit (3) dem weiteren Zuchtgefäß (2) auf natürliche Weise zugeführt werden kann.

## Revendications

1. Dispositif de culture de plante, comprenant : un bac de culture (1) permettant la culture d'une plante (A) à l'intérieur de celui-ci, un réservoir (4) permettant de stocker un liquide de culture (3) pour la plante (A), un conduit de communication (26) entre le bac (1) et le réservoir (4), et une pompe (P) permettant d'alimenter le bac de culture (1) de la plante en liquide (3) stocké dans le réservoir (4) ;
le réservoir (4) présentant une partie de support (9) permettant de supporter le bac de culture (1) au-dessus du réservoir (4) ; le conduit de communication (26) étant disposé le long de la partie de support (9) ; et la pompe (P) étant prévue intégrée au réservoir (4) ;
**caractérisé**
**en ce que** le conduit de communication (26) est constitué d'un tuyau flexible en résine (13) ; la pompe (P) est construite comme une pompe tubulaire ; et
la pompe (P) est raccordée à une partie intermédiaire du tuyau en résine (13), ladite pompe (P) permettant de refouler le liquide de culture (3) vers le bac de culture (1) par l'intermédiaire du tuyau en résine (13), et
le liquide en excédent (3a) du liquide de culture (3) alimentant le bac de culture (1) étant retourné vers le réservoir (4) par l'intermédiaire du tuyau en résine (13).

2. Dispositif de culture de plante selon la revendication 1, **caractérisé en ce que** la pompe (P) peut être commutée entre un état de refoulement du liquide (3) stocké vers le bac de culture (1) et un autre état de retour dans le réservoir (4) du liquide en excédent (3a) du liquide de culture (3) alimentant le bac de culture (1) et de ventilation d'air pour la formation de bulles dans le liquide stocké.

3. Dispositif de culture de plante selon la revendication 1, **caractérisé en ce que** le réservoir (4) comprend un autre bac de culture (2), différent du bac de culture (1), si bien que le liquide stocké (3) peut être refoulé par voie naturelle vers l'autre bac de culture (2).
